(19)

Europäisches
Patentamt
European
Patent Office
Office européen
des brevets

(11) **EP 2 963 882 A1**

(12) **EUROPEAN PATENT APPLICATION**

(43) Date of publication:
**06.01.2016 Bulletin 2016/01**

(51) Int Cl.:
*H04L 25/06* (2006.01)　　　*H04L 1/00* (2006.01)

(21) Application number: **14306058.0**

(22) Date of filing: **30.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Schmalen, Laurent
70435 Stuttgart (DE)**
• **Schuh, Karsten
70435 Stuttgart (DE)**

(74) Representative: **2SPL Patentanwälte PartG mbB
Postfach 15 17 23
80050 München (DE)**

(54) **Method of deriving information bits from a received phase modulated optical signal carrying forward error correction encoded bits**

(57)　　Proposed is a method of deriving information bits from a received phase modulated optical signal carrying FEC encoded bits. The method contains the steps of providing a predefined phase modulation constellation scheme, deriving from the predefined phase modulation constellation scheme an adapted phase modulation constellation scheme, using a set of received complex modulation symbol values, and finally deriving from a vector of received symbol values a vector of derived information bits using a soft demapping algorithm, a soft FEC decoding algorithm and a hard decision step.

Fig. 4

**Description**

**Field of the invention**

The invention relates to a method of and an optical receiver for deriving information bits from a received phase modulated optical signal carrying forward error correction encoded bits.

**Background**

In optical data transmission, a modulation of an optical carrier signal may be carried out as a phase modulation in which either only the phase or alternatively the phase and the amplitude of the carrier signal is modulated in dependence on transmission bits and in accordance with a phase modulation constellation scheme of a chosen phase modulation method. The transmission bits may be for example forward error correction (FEC) encoded bits provided by an FEC encoder. The FEC encoder encodes information bits into FEC encoded bits. Such FEC encoding may be performed stepwise, wherein within an encoding step a vector of information bits is encoded into a vector of FEC encoded bits.

Prominent examples of a phase modulation method with a corresponding phase modulation constellation scheme is that of quaternary phase shift keying (QPSK). In QPSK, only the phase of the carrier signal is modulated. Another prominent example of a phase modulation method, in which the phase and the amplitude of the carrier signal is modulated, is for example the phase modulation method 8-QAM, wherein QAM stands for quaternary amplitude modulation. While in QPSK a single constellation point represents two transmission bits, in 8-QAM a single constellation point represents three transmission bits.

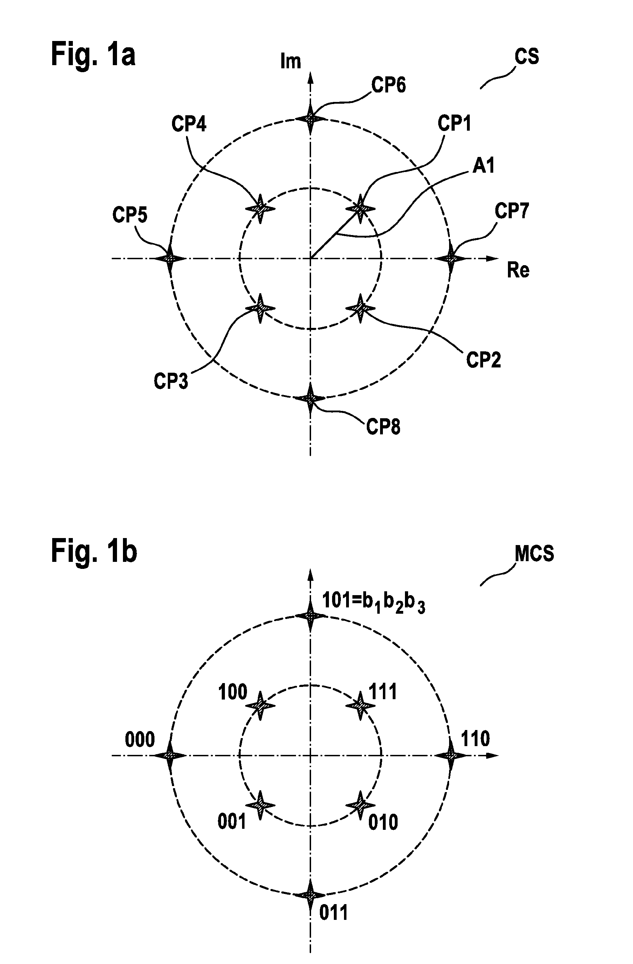

Figure 1a shows a constellation scheme CS for the example of 8-QAM in the complex plane, wherein the constellation scheme CS contains eight different constellation points CP1, ..., CP8 representing respective complex values. While Figure 1a shows the example of the amplitude A1 of the constellation point CP1, different respective amplitudes for the different constellation points may be imagined.

For a chosen mapping of tuples of information bits onto the constellation points, Figure 1b shows the mapped constellation scheme MCS. The different constellation points of Figure 1a are each assigned an m-tuple of bits, wherein in this example m is equal to 3. For example, for the constellation point CP6 of Figure 1a, the tuple of bits b1, b2, b3 assigned to this point is equal to the bit sequence '101'.

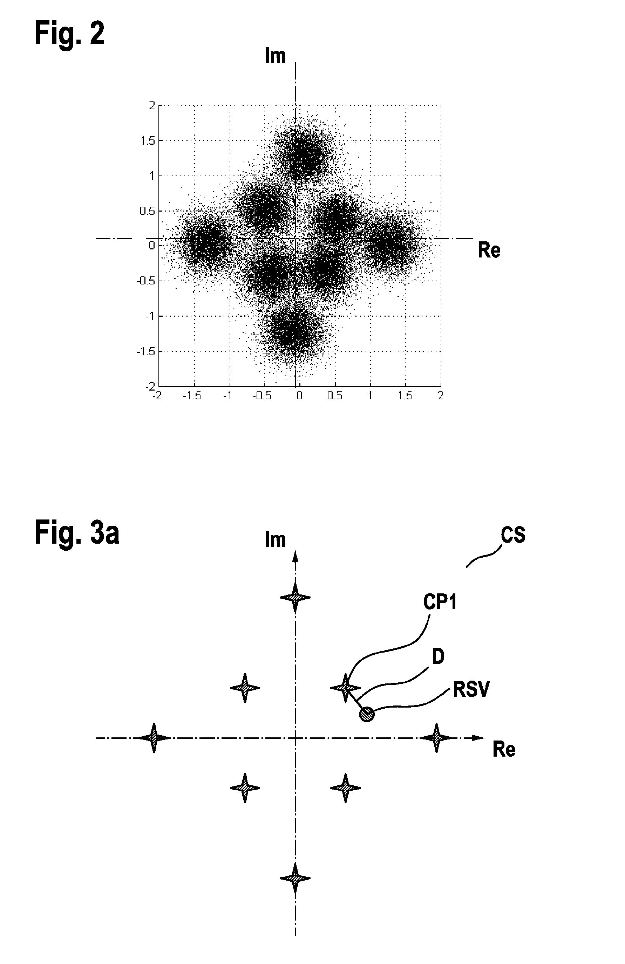

When transmitting transmission bits from a transmitting side to a receiving side, the optical signal may experience different kinds of signal distortion. For the chosen example of 8-QAM, Figure 2 shows exemplary received symbol values, indicated as little black dots, received at a receiving side. Typical distortion causes the received symbol values to form clouds around initial constellation points of the constellation scheme.

Previous methods for addressing distortions of received symbol values try to model these distortions in different ways. A first way of modeling transmission distortions is that of a constant gain factor increasing the respective amplitudes of the constellation points by a same scaling factor. In such a model, all constellation points would be moved away from the center of origin of the axis by a same amplitude factor. Such distortion modeling would be insufficient for modeling the distortions shown in Figure 2.

Another way of modeling transmission distortions is the way of introducing a so called skew or shear mapping, which would lead to a shift of the constellation points in a manner equivalent to the complex plane being deformed by a shear mapping. Also such distortion modeling would be insufficient to model the distortions of the symbol values in Figure 2.

An even other way of modeling transmission distortions is that of a rotation of the constellation scheme around the center of origin by a same angle for all constellation points. Clearly, also such rotation distortion modeling would not be a precise model for modeling the transmission distortions of the symbol values in Figure 2.

Furthermore, also a combination of one or more of the different models of a gain factor, a shear mapping a rotation of the constellation scheme may still be insufficient for properly modeling the transmission distortions of the symbol values in Figure 2.

**Summary**

Proposed is a method of deriving information bits from a received phase modulated optical signal carrying forward error correction encoded bits, comprising

-    deriving from the optical signal received complex symbol values,
-    providing a predefined phase modulation constellation scheme,
-    deriving from the predefined phase modulation constellation scheme an adapted phase modulation constellation scheme, using a set of the received symbol values,

- deriving, via a soft-demapping algorithm, from a vector of received symbol values a vector of likelihood values corresponding to a vector of FEC encoded bits, using the adapted phase modulation constellation scheme,
- deriving, via a FEC soft-decoding algorithm, from the vector of likelihood values corresponding to a vector of FEC encoded bits a vector of likelihood values corresponding to a vector of FEC decoded bits,
- deriving from the vector of likelihood values corresponding to a vector of FEC decoded bits a vector of information bits .

Preferably, the step of deriving the adapted phase modulation constellation scheme comprises

- associating the symbol values of the set to respective constellation points of the predefined phase modulation constellation scheme,
- determining a constellation point of the adapted phase modulation constellation scheme based on those of the symbol values that were associated to the corresponding constellation point of the predefined phase modulation constellation scheme.

Preferably, the method comprises

- determining, the constellation point of the adapted phase modulation constellation scheme as the mean value of those symbol values that were associated to the corresponding constellation point of the predefined phase modulation scheme.

Preferably, the method comprises

- associating the symbol values of the set to the respective constellation points of the predefined phase modulation constellation scheme, such that a criterion between an associated symbol value and the respective constellation point is optimized.

Preferably, the criterion is an Eucledian distance that is minimized.
Preferably, the criterion is a probability that is maximized.
Preferably, the method comprises

- updating the predefined phase modulation constellation scheme as the adapted phase modulation constellation scheme,
- deriving an updated set of symbol values using further received complex symbol values,
- deriving a further adapted phase modulation constellation scheme, by

   o associating the symbol values of the updated set to respective constellation points of the predefined phase modulation constellation scheme ,
   o and determining a constellation point of the further adapted phase modulation constellation scheme based on those of the symbol values that were associated to the corresponding constellation point of the updated predefined phase modulation constellation scheme.

Preferably, a symbol value represents an m-tuple of FEC encoded bits, and the method comprises furthermore

- deriving for a decoded vector of information bits a vector of FEC re-encoded bits,
- identifying a mapping of m-tuples of the FEC re-encoded bits onto indices of respective constellation points of the predefined phase modulation constellation scheme,
- deriving a further adapted phase modulation constellation scheme, by

   o associating the remaining symbol values of the set, for which corresponding vectors of FEC re-encoded bits were not yet derived, to respective constellation points of the predefined adapted phase modulation constellation scheme,
   o determining a constellation point with a respective index of the further adapted phase modulation constellation scheme based on

      ▪ those remaining symbol values, that were associated to the corresponding constellation point of the predefined phase modulation constellation scheme
      ▪ and those symbol values of the vector of received symbol values, for which the identified mapping of the corresponding m-tuple of re-encoded FEC bits yields the respective same index of the constellation point to be determined.

Preferably, the step of deriving the vector of likelihood values corresponding to a vector of FEC decoded bits is carried out in iterative processing steps using the soft-demapping algorithm and the FEC soft-decoding algorithm in an iterative manner.

Preferably, the iterative processing steps are carried out as sequential processing steps in which the soft-demapping algorithm and the soft-decoding algorithm alternate.

Preferably, the method comprises furthermore,

- providing a set of predefined phase modulation constellation schemes,
- deriving for each of the predefined phase modulation constellation schemes respective adapted phase modulation constellation schemes, using the set of the received symbol values,
- choosing one of the adapted phase modulation constellation schemes as the adapted phase modulation constellation scheme used for deriving, via the soft-demapping algorithm, from the vector of received symbol values the vector of likelihood values corresponding to a vector of FEC encoded bits.

Preferably, the chosen one of the adapted phase modulation constellation schemes and its respective predefined phase modulation constellation scheme maximize a likelihood criterion between the adapted phase modulation constellation schemes and the respective predefined phase modulation constellation schemes, respectively.

Proposed is also an optical receiver, which comprises

- an optical interface, operable to receive a phase modulated optical signal carrying forward error correction encoded bits,
- a local oscillator, an optical hybrid mixer, an analogue digital converter and a processing unit, that are operable in conjunction to derive from the optical signal received complex symbol values,

wherein the processing unit is furthermore configured to

- provide a predefined phase modulation constellation scheme,
- derive from the predefined phase modulation constellation scheme an adapted phase modulation constellation scheme , using a set of the received symbol values,
- derive, via a soft-demapping algorithm, from a vector of received symbol values a vector of likelihood values corresponding to a vector of FEC encoded bits, using the adapted phase modulation constellation scheme,
- derive, via a FEC soft-decoding algorithm, from the vector of likelihood values corresponding to a vector of FEC encoded bits a vector of likelihood values corresponding to a vector of FEC decoded bits,
- derive from the vector of likelihood values corresponding to a vector of FEC decoded bits a vector of information bits.

The processing unit of the proposed optical receiver is configured to carry out the different steps of the proposed method.

The possible advantages of the proposed method as well as the proposed device may be grasped, by taking the following explanations and consideration.

As previously mentioned, effects modeled by a gain factor, skew or shear mapping as well as a rotation of the constellation scheme may not be sufficient for modeling transmission distortions as shown in Figure 2.

Figure 3a shows the constellations scheme CS as previously shown in Figure 1a together with a received symbol value RSV. The received symbol value RSV may be associated to one of the constellation points, wherein in this example the symbol value RSV is associated to the constellation point CP1. This association is exemplarily chosen, since the distance D between the symbol value RSV and the constellation point CP1 is smaller than for any other constellation point. Such association may be based either on the distance between the symbol value RSV and the constellation points or alternatively on a probability density function taking the symbol value RSV and the constellation points into consideration. Such association is able to model a noise distortion effect of received symbol values forming clouds around a constellation point, as previously described with regard to Figure2 .

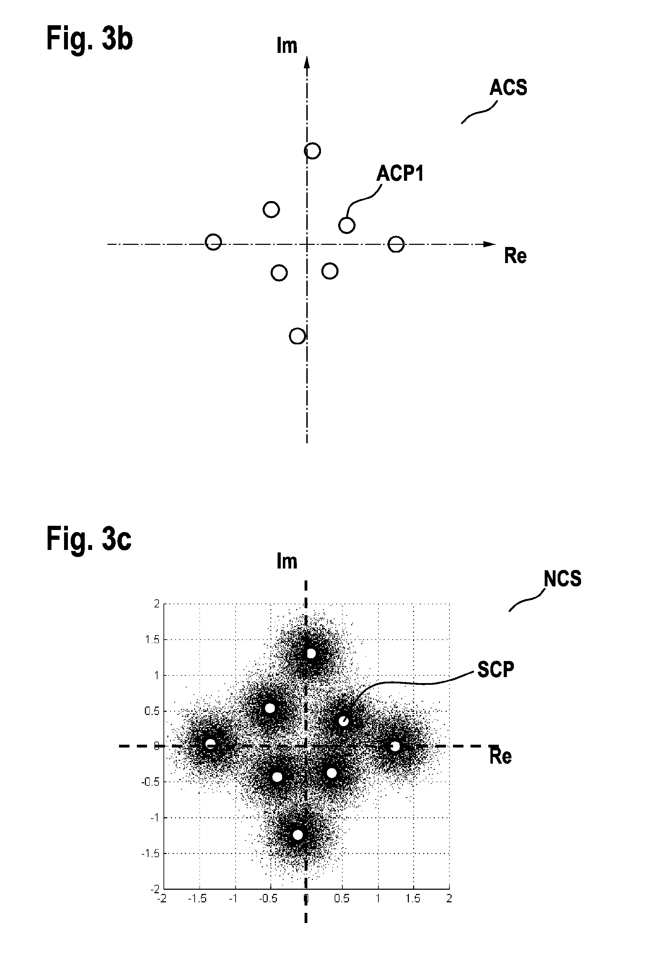

When having associated received symbol values of for example the symbol values of Figure 2 to different constellation points of the constellation scheme CS of Figure 3a, adapted constellation points of an adapted modulation constellation scheme ACS, shown in Figure 3b, may be derived. Herein, an adapted constellation point, for example ACP1, of the adapted phase modulation constellation scheme ACS is determined based on the symbol values, for example the symbol value RSV of Figure 3a, that were associated to the corresponding constellation point CP1 of the predefined phase modulation constellation scheme CS.

When superposing the constellation points of the adapted constellation scheme ASC of Figure 3b with the distorted symbol value observations of Figure 2, one can clearly see from such superposition NCS shown in Figure 3c, that the estimated or adapted constellation points, such as the point SCP, very well fit a model, in which transmission distortion is caused by a shift of the constellation points as derived for the adapted constellation scheme ACS of Figure 3b. In this proposed method, an individual respective shift can be modeled for each constellation point individually.

Thus, the proposed method, as well as the proposed device, allow to model transmission distortions by an individual, respective linear shift of the constellation points together with further additional noise leading to symbol values forming clouds around the shifted constellation points. Such individual, respective linear shifts of constellation points that are independent of each other can not be modeled by means of a gain factor, shear mapping and/or a rotation of a constellation scheme, since in such models, or a superposed model of these models, the respective shifts of the different constellation points would depend on each other.

**Brief description of the Figures**

Figure 1a shows an example of a constellation scheme together with respective constellation points.
Figure 1b shows a mapping of transmission bits onto the different constellation points of the constellation scheme.
Figure 2 shows received symbol values observed at a receiving side.
Figure 3a shows the constellation scheme together with a single received symbol value.
Figure 3b shows an adapted constellation scheme.
Figure 3c shows a superposition of the adapted constellation scheme and the received symbol values.
Figure 4 shows transmission steps as well as receiving steps according to a first embodiment.
Figure 5 shows transmission steps as well as receiving steps according to a second embodiment.
Figure 6 shows additional steps of interleaving and de-interleaveing.
Figure 7a shows iteration steps carried out by a soft de-mapping and a soft decoding step.
Figure 7b shows iteration steps carried out together with interleaving and de-interleaveing steps.
Figure 8a and 8b show sequential steps in which a soft de-mapping step and a soft decoding step alternate.
Figure 9 shows receiving steps in which multiple constellation schemes of different phase modulation methods are used.
Figure 10 shows a proposed optical receiver.

**Description of Embodiments**

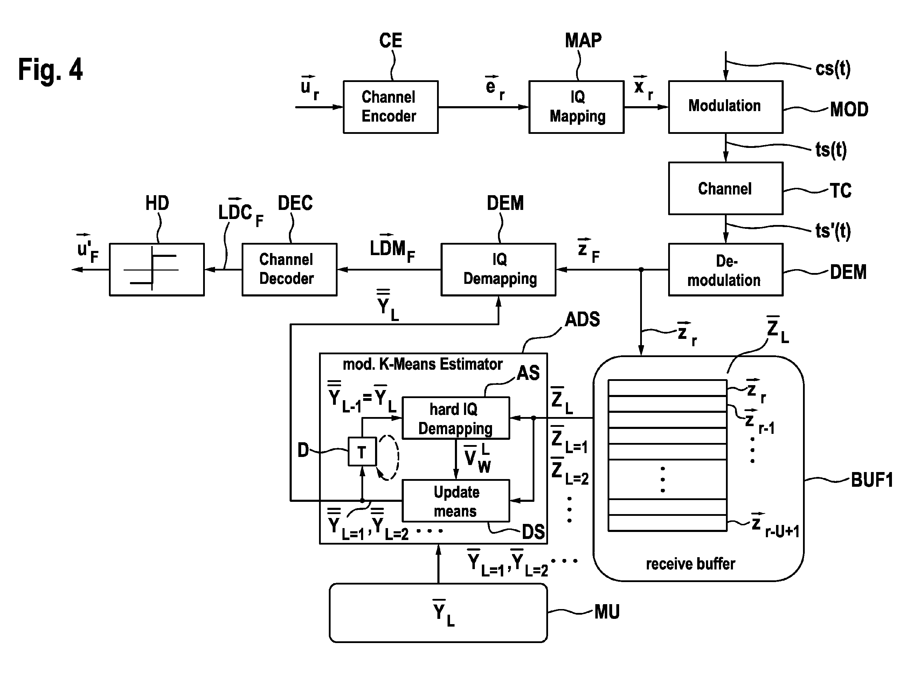

Figure 4 shows an encoding step CE, in which a transmitting side encodes information bits given in an information bit vector

$$\vec{u}_r = (u_{r,1}, \dots, u_{r,K}) \ ,$$

wherein a single information bit $u_{r,k}$ is given with the *index k* = 1, ..., *K.* Herein, the vector index of frame index is *r.*
The encoding step of FEC encoding is preferably a low density parity check code (LDPC) or a Turbo code.
For either of such FEC codes, the proper respective encoding method is described in the document 'W. Ryan and S. Lin, "Channel Codes: Classical and Modern," Cambridge University Press, Sep. 2009' or alternatively in the document' T. K. Moon, "Error Correction Coding: Mathematical Methods and Algorithms," Wiley, 2005'.
The information bits $u_{r,k}$ are thus encoded into FEC encoded bits $e_{r,n}$ with index n = 1, ..., N, N > K, given within FEC encoded bit vectors as

$$\vec{e}_r = (e_{r,1}, \dots, e_{r,N}) \ .$$

The FEC encoded bits $e_{r,n}$ are then mapped as m-tuples in a mapping step MAP onto constellation points of a predefined constellation scheme, for example a constellation scheme 8-QAM as previously described. Such mapping may be described by a mapping function as

$$\mu(e_1, \ldots, e_m) : \{0,1\}^m \rightarrow \overline{y} \subset C \,,$$

denoting a modulation function that maps an m-tuple to a complex modulation symbol $\overline{y}$ of the predefined constellation scheme. The predefined phase modulation constellation scheme $\overline{Y}$ contains a number of M constellation points with $M = 2^m$, wherein the set of constellation points representing the constellation scheme can be written as

$$\overline{Y} = (\overline{y}_1, \ldots, \overline{y}_M) .$$

A single constellation point can be written as $\overline{y}_w$ with the index $w = 1, \ldots, M$.

The mapping results in a vector of complex symbol values as

$$\vec{x}_r = (x_{r,1}, \ldots, x_{r,O})$$

containing symbol values $x_{r,o}$ with index $o = 1, \ldots, O$.

It shall be assumed, that the number N of FEC encoded bits is a whole-numbered multiple of the number m, which is the number of bits per modulation symbol, such that

$$O = \frac{N}{m} \quad .$$

If this is not the case, then the number of complex symbol values O can determined as

$$O = \left\lceil \frac{N}{m} \right\rceil \,,$$

wherein a bit stuffing of the vector of FEC encoded bits $\vec{e}_r = (e_{i,1}, \ldots, e_{r,N})$ may be performed at the transmitting side and indicated to the receiving side.

An optical carrier signal $cs(t)$ is modulated in dependence on the derived complex symbol values of the vector $\vec{x}_r$ and in accordance to the predefined phase modulation constellation scheme. This yields via the modulation step MOD the optical transmission signal $ts(t)$.

After transmission of the transmission signal $ts(t)$ over the transmission channel TC, the signal $ts'(t)$ is received at the receiving side.

The following steps from now on described with regard to the Figure 4 are the receiving steps according to the first embodiment of the proposed method.

Received symbol values $z_{r,o}$ are derived in a demodulation step DEM. The complex symbol values $z_{r,o}$ are preferably derived, by mixing the received signal $ts'(t)$ with a coherent optical signal via a hybrid optical mixer, wherein this coherent signal as well as the hybrid mixer are not explicitly illustrated in Figure 4. Preferably, the mixer is followed by an optical or digital signal processing system, which may be conFigured to reduce channel distortions such as e.g. chromatic dispersion.

The received symbol values $z_{r,o}$ may be concatenated to vectors as

$$\vec{z}_r = \left( z_{r,1}, \ldots, z_{r,O} \right)$$

with index $o$ = 1, ..., $O$.

The received vectors of symbol values $\vec{z}_r$ are stored in a buffer BUF1 as a set of symbol values $\overline{Z}$ indicated for a first iteration with *index L* as $\overline{Z}_L$. The buffer BUF1 has a predefined size $U$. Assuming, that at a given time instance the index of the vector of symbol values is $r$, then the buffer BUF1 stores the current vector $\vec{z}_r$ as well as the $U$ previous vectors up to the vector $\vec{z}_{r-U+1}$. The buffer BUF1 is constantly updated, such that at the time instance corresponding to index $r$ the previous vector $\vec{z}_{r-U}$ is removed from the buffer BUF1, and thus removed from the set $\overline{Z}$, while the current vector $\vec{z}_r$ is added to the buffer BUF1, and thus added to the set $\overline{Z}$.

The index of the stored vectors is

$$u = r, \ldots, r - U + 1.$$

In an adapting step ADS, an adapted phase modulation constellation scheme $\overline{\overline{Y}}_L$ is derived from a provided, predefined phase modulation constellation scheme $\overline{Y}_L$, based on the set $\overline{Z}$ of received symbol values. The predefined phase modulation constellation scheme $\overline{Y}_L$ is preferably provided by a memory unit, MU, which stores the predefined phase modulation constellation scheme $\overline{Y}_L$.

Herein, the index L denotes the L-th iteration for the determination of the adapted phase modulation constellation scheme $\overline{\overline{Y}}_L$ via the adaptation step ADS using the predefined phase modulation constellation scheme $\overline{Y}_L$ of the L-th iteration. *For L* = 1, the predefined phase modulation constellation scheme $\overline{Y}_{L=1}$ is for example an initial phase modulation constellation scheme such as the previously mentioned constellation scheme of 8QAM. For $L$ = 2, the predefined phase modulation constellation scheme $\overline{Y}_{L=2}$ is updated as the adapted phase modulation constellation scheme $\overline{\overline{Y}}_{L=1}$.

The step of deriving from the predefined phase modulation constellation scheme $\overline{Y}_L$ the adapted phase modulation constellation scheme $\overline{\overline{Y}}_L$ in the adapting step ADS will be described now in detail. This is explained exemplarily for the iteration L = 1 with the predefined scheme $\overline{Y}_{L=1}$ and the updated or adapted scheme $\overline{\overline{Y}}_{L=1}$.

In an association step AS, the symbol values of the set $\overline{Z}$ are associated to respective constellation points of the predefined phase modulation constellation scheme $\overline{Y}_{L=1}$. For a single specific symbol value $z_{u,o}$, a constellation point $\tilde{y}_{u,o}$ of the scheme $\overline{Y}_{L=1}$ is determined, to which the symbol value $z_{u,o}$ is associated. In other words, the constellation point $\tilde{y}_{u,o}$ is one out of the constellation points $\overline{y}_w$ out of the set of constellation points $\overline{Y}_{L=1}$, which may be denoted for the current iteration for reasons of simplicity as $\overline{Y}$.

The symbol value $z_{u,o}$, as one out of the symbol values of the set $\overline{Z}$, is associated to that respective constellation point $\tilde{y}_{u,o}$ of the predefined phase modulation constellation scheme $\overline{Y}_{L=1}$, for which a criterion between the associated symbol value $z_{u,o}$ and the respective constellation point $\tilde{y}_{u,o}$ is optimized.

In detail, assuming as a criterion a probability density function $p(z_{u,o} | \hat{y})$ and a uniform probability of occurrence of the constellation points, one may derive the respective constellation point $\tilde{y}_{u,o}$ via

$$\tilde{y}_{u,o} = \arg \max_{\hat{y} \in \overline{Y}} p\left( z_{u,o} \mid \hat{y} \right).$$

This is equivalent to

$$\tilde{y}_{u,o} = \arg \max_{\hat{y} \in \overline{Y}} \ln \left[ p(z_{u,o} | \hat{y}) \right].$$

Assuming a complex valued Gaussian distribution modeling Gaussian noise as

$$p(z_{u,o} \mid \hat{y}) = \frac{1}{\sqrt{\pi \, N_0}} \exp\left( -\frac{(z_{u,o} - \hat{y})^2}{N_0} \right) \; ,$$

one yields in logarithmic domain

$$\tilde{y}_{u,o} = \arg\max_{\hat{y} \in \overline{Y}} \; \ln(C) - \frac{1}{N_0} \left| z_{u,o} - \hat{y} \right|^2$$

with

$$C = \frac{1}{\pi \, N_0} \; .$$

Finally, this deteriorates to

$$\tilde{y}_{u,o} = \arg\min_{\hat{y} \in \overline{Y}} \; \left| z_{u,o} - \hat{y} \right|^2 \; .$$

The last criterion represents the Euclidean distance between the symbol value $z_{u,o}$ and a constellation point $\hat{y}$.
In other words, a first criterion to be optimized is an Euclidean distance between a symbol value $z_{u,o}$ and a respective constellation point $\overline{y}_w$, wherein this distance is to be minimized via

$$\tilde{y}_{u,o} = \arg\min_{\hat{y} \in \overline{Y}} \; \left| z_{u,o} - \hat{y} \right|^2 \; .$$

Another, second criterion is the Gaussian probability $p(z_{u,o} \mid \tilde{y})$, which is to be maximized via

$$\tilde{y}_{u,o} = \arg\max_{\hat{y} \in \overline{Y}} \; p(z_{u,o} \mid \hat{y}) \; .$$

Within the association step AS, for each of the different constellation points $\overline{y}_w$ with the index $w = 1, ..., M$, a respective set $\overline{V}_w = \{z_{u,o} : \tilde{y}_{u,o} = \overline{y}_w\}$ of symbol values $z_{u,o}$ is to be derived, wherein this set $\overline{V}_w$ contains those received symbol values, that were associated to the constellation point $\overline{y}_w$. Alternatively, the set $\overline{V}_w$ can be rewritten as a set of associated symbol values $\overline{V}_w = \{v_{w,1},...,v_{w|V_w|}\}$, wherein $|V_w|$ is the cardinality of the set the $\overline{V}_w$. For the L-th iteration, the set $\overline{V}_w$ can be written with proper indices as $\overline{V}_w^{\,L}$

Alternatively, instead of providing the set of symbol symbol values $\overline{V}_w$ that were associated to the constellation

point $\overline{y}_w$, a set containing the respective indices $w_{u,o}$ of the symbol values contained in the set $\overline{V}_w$ may be provided. The index $w_{u,o}$ is the index of that constellation point $\overline{y}_w$, to which the symbol value $z_{u,o}$ was associated. This is preferably determined via

$$w_{r,o} = \underset{w=1,\ldots,M}{\arg\min} \ d\!\left(z_{u,o}, \overline{y}_w\right) \ .$$

with $d(z_{u,o}, \overline{y}_w)$ being for example the previously mentioned Euclidean distance. In other words, the association step AS performs a hard de-mapping of the symbol values $z_{u,o}$ onto constellation points $\overline{y}_w$ of the provided constellation scheme $\overline{Y}$.

Within a determining step DS, the adapted phase modulation constellation scheme $\overline{\overline{Y}}_L$ is determined, which is for the *iteration L* = 1 the constellation scheme $\overline{\overline{Y}}_{L=1}$, and which may be denoted for the current iteration for reasons of simplicity as $\overline{\overline{Y}}$.

A constellation point $\overline{\overline{y}}_w$ of the adapted phase modulation constellation scheme $\overline{\overline{Y}}_{L=1}$ is determined based on those symbol values $\overline{V}_w = \{z_{u,o} : \overline{y}_{u,o} = \overline{y}_w\}$ or $\overline{V}_w = \{v_{w,1}, \ldots, v_{w,|V_w|}\}$ that were associated to the corresponding constellation point $\overline{y}_w$ of the predefined phase modulation constellation scheme $\overline{Y}_{L=1}$.

This can be carried out for each constellation point $\overline{\overline{y}}_w$ of the adapted phase modulation constellation scheme $\overline{\overline{Y}}_{L=1}$ individually.

For a constellation point $\overline{\overline{y}}_w$ of the adapted phase modulation constellation scheme $\overline{\overline{Y}}_{L=1}$ with the index w, the adapted constellation point $\overline{\overline{y}}_w$ can be derived via

$$\overline{\overline{y}}_w = \frac{1}{|V_w|} \sum_{g=1}^{|V_w|} v_{w,g} \ .$$

In other words, the constellation point $\overline{\overline{y}}_w$ with the index $w$ is determined as the mean value of those symbol values $v_{w,g}$ that were associated to the corresponding constellation point $\overline{y}_w$, with the index $w$, of the predefined phase modulation constellation scheme $\overline{Y}_{L=1}$.

This yields the adapted phase modulation constellation scheme as

$$\overline{\overline{Y}}_{L=1} = \left(\overline{\overline{y}}_1, \ldots, \overline{\overline{y}}_M\right) \ .$$

The step of deriving from the predefined phase modulation constellation scheme $\overline{Y}_{L=1}$ the adapted phase modulation constellation scheme $\overline{\overline{Y}}_{L=1}$ is carried out, by determining a constellation point of the adapted phase modulation constellation scheme $\overline{\overline{Y}}_{L=1}$ as the mean value of those symbol values that were assigned to the respective constellation point of the predefined phase modulation constellation scheme $\overline{Y}_{L=1}$. This is numerically less cumbersome than a solution, in which a so called soft k-means algorithm estimates adapted constellation points via an expectation maximization algorithm using mean values and variance values of a Gaussian distribution. Therefore, the determining step DS of the proposed algorithm is less cumbersome to implement than a soft K-means algorithm while achieving at a receiving side detection results of received information bits that are close to or almost equivalent to detection results achieved than when using a soft K-means algorithm in the determining step DS.

Having determined in the current iteration $L$ = 1 the adapted phase modulation constellation scheme $\overline{\overline{Y}}_{L=1}$, the predefined phase modulation constellation scheme $\overline{Y}_{L=2}$ is then updated for the iteration $L$ = 2 as the adapted phase modulation constellation scheme $\overline{\overline{Y}}_{L=1}$ of the previous iteration. The predefined phase modulation constellation scheme $\overline{Y}_{L=2}$ is stored in the memory unit MU.

After a time delay T, indicated by a delay element D, a further iteration with index $L$ = 2 for carrying out the association step AS and the determination step DS is performed. This time delay is equal to the time span needed for receiving a new vector represented by a time span elapsed for receiving a new vector $\vec{z}_{r+1}$ of symbol values. The new

vector $\vec{z}_{r+1}$ is stored in the buffer BUF1, while the vector $\vec{z}_{r-U+1}$ is removed from the buffer BUF1. Thus, using the new received vector $\vec{z}_{r+1}$, an updated set of symbol values $\overline{Z}_{L=2}$ is derived.

In this next iteration $L = 2$, a further adapted phase modulation constellation scheme $\vec{Y}_{L=2}$ is derived, using the predefined phase modulation constellation scheme $\overline{Y}_L$ that is equivalent to the previous adapted phase modulation constellation scheme $\vec{Y}_{L=1}$.

The further adapted phase modulation constellation scheme $\vec{Y}_{L=2}$ is derived, by repeating the association step AS and the determining step DS. The symbol values of the updated set $\overline{Z}_{L=2}$ of symbol values is associated to respective constellation points of the predefined phase modulation constellation scheme $\overline{Y}_{L=2}$, which yields new sets of associated symbol values $\overline{V}_w{}^{L=2}$ for the symbol values of the predefined phase modulation constellation scheme $\overline{Y}_{L=2}$. Finally, a constellation point of the further adapted phase modulation constellation scheme $\vec{Y}_{L=2}$ is determined based on those of the symbol values, that were associated to the corresponding constellation point of the updated predefined phase modulation constellation scheme $\overline{Y}_{L=2}$.

The iterations with index $L$ carried out in a loop by the association step AS and the determination step DS may be terminated either after a predefined number of iterations or in dependence on a predefined convergence criterion.

For a first received vector of symbol values $\vec{z}_{r=1}$ the predefined constellation scheme $\overline{Y}_{L=1}$ may be used for deriving in a de-mapping step DEM, which is a soft de-mapping algorithm, a vector of likelihood values $\vec{LDM}_{r=1}$ corresponding to a vector of FEC encoded bits.

For symbol values of a vector $\vec{z}_F$ with F > r received at a later time instance, the adapted constellation scheme $\overline{\overline{Y}}_L = \overline{Y}_{L=1}$ may be used in the de-mapping step DEM for deriving from $\vec{z}_F$ a vector of likelihood values $\vec{LDM}_F$ corresponding to a vector of FEC encoded bits.

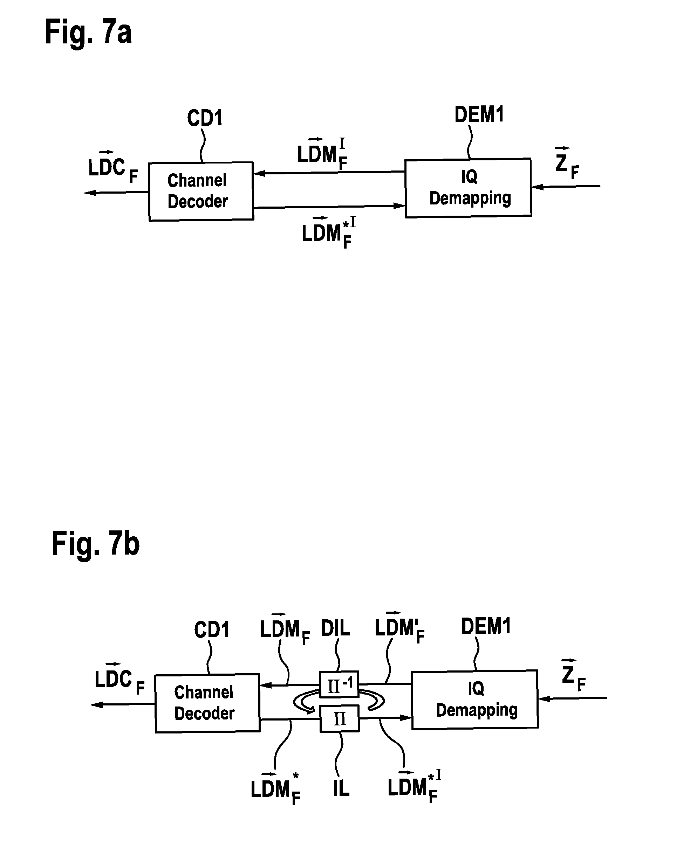

In the example of Figure 4, no iterations are carried out between the soft de-mapping step DEM and the next following FEC soft decoding step DEC. Preferably, iterations between these steps may be carried out such as later on described in detail with regard to Figure 7a.

The vector of likelihood values $\vec{LDM}_F(\vec{e}_F)$ corresponding to a vector of FEC encoded bits is of the size N, which is the size of the vector $\vec{e}_F$ as the vector of FEC encoded bits.

A single likelihood value as $LDM(e_{r,n})$ for the n-th FEC encoded bit of the frame or vector with the index r can then be derived via

$$LDM(e_{r,n}) = \ln\left[\frac{\sum_{\hat{y} \in \overline{Y}_i^0} p(z_{r,j} \mid \hat{y})}{\sum_{\hat{y} \in \overline{Y}_i^1} p(z_{r,j} \mid \hat{y})}\right] .$$

Herein, $p(z_{r,j} \mid \hat{y})$ denotes the previously mentioned Gaussian distribution.

The summation

$$\sum_{\hat{y} \in Y_i^c}$$

is carried out for the sub-partitioned set of constellation points as

$$\overline{Y}_i^c = \left\{y_n \in \overline{Y} : \mu_i^{-1}(y_w) = c\right\} ,$$

wherein the i-th bit is equal to 0 or 1 as $c \in \{0,1\}$.

This is sub-partitioning of the set of constellation points of the predefined constellation scheme $\overline{Y}$ into such subsets $\overline{Y}_i^c$, which contain those modulation symbols that represent an m-tuple of bits for which the i-th bit takes on the value $c \in \{0, 1\}$.

In other words, for example the sum

$$ \sum_{\hat{y} \in \overline{Y}_i^0} $$

runs over all constellation points, for which the i-th bit is zero.

Thus, the numerator of the fraction shown above is the sum of the probabilities for the given complex value $z_{r,j}$ given those symbol values $\hat{y}$ that having at their i-th bit a 0. Equivalent considerations hold for the denominator of the fraction with the i-th bit being 1.

It shall be noted that the likelihood value $LDM(e_{r,n})$ derived for the FEC encoded bit is derived in the logarithmic domain.

For clarification of the indices used above, the symbol value $z_{r,j}$ is the j-th symbol in a vector $\vec{z}_r$ of length O. The FEC encoded information bit $e_{r,n}$ is the n-th bit in a *vector* $\vec{e}_r$ of length N. Herein, $b_i$ is the i-th bit of an m-tuple represented by a symbol $z_{r,j}$. This yields the relationship of the indices as

$$ n = (j-1) \cdot m + i \ . $$

The FEC code used at the transmitting side in the FEC encoding step CE may be a systematic code leading to a vector of FEC encoded bits

$$ \vec{e}_r = (e_{r,1}, \ldots, e_{r,K}, \ldots, e_{r,N}) , $$

for which the first k-bits are identical to the information bits subject input to the coding step CE

$$ e_{r,n} = u_{r,n} \quad , \quad n = 1, \ldots, K \quad . $$

The further additional bits are parity bits

$$ e_{r,n} \ , \quad n = K+1, \ldots, N \quad . $$

At the receiving side, a decoding step DEC performs FEC soft decoding for deriving from the vector of likelihood values $\vec{LDM}_F$ corresponding to a vector of FEC encoded bits a vector of likelihood values $\vec{LDC}_F$ corresponding to vector of FEC decoded bits. The vector $\vec{LDC}_F(\vec{e}_F)$ contains likelihood values $LDC(e_{F,n})$ for the n-th bit out of the vector with the frame index F.

In the case of relying on an LDPC code, the soft-decision FEC decoding algorithm may be carried out as described in detail in the document "Frank R. Kschischang, Brendan J. Frey, Hans-Andrea Loeliger,'Factor graphs and the sum-product algorithm', IEEE TRANSACTIONS ON INFORMATION THEORY, VOL. 47, NO. 2, FEBRUARY 2001". In the case that the first FEC encoding algorithm relies on a Turbo Code, the soft-decision FEC decoding algorithm may be carried out as described in detail in the document "J. Hagenauer, E. Offer, L. Papke, 'Iterative Decoding of Binary Block and Convolutional Codes', IEEE TRANSACTIONS ON INFORMATION THEORY, Vol.42, No.2, March1996".

From the vector of likelihood values $\vec{LDC}_F$ corresponding to a vector of FEC decoded bits, a vector of derived information bits $\vec{u}'_F$ can then be derived in a hard decision step HD. This is carried out via

$$u'_{F,k} = 0 \quad for \quad LDC(e_{F,k}) > 0$$

$$u'_{F,k} = 1 \quad for \quad LDC(e_{F,k}) < 0$$

for the k-th bit of the vector with the arbitrary index F.

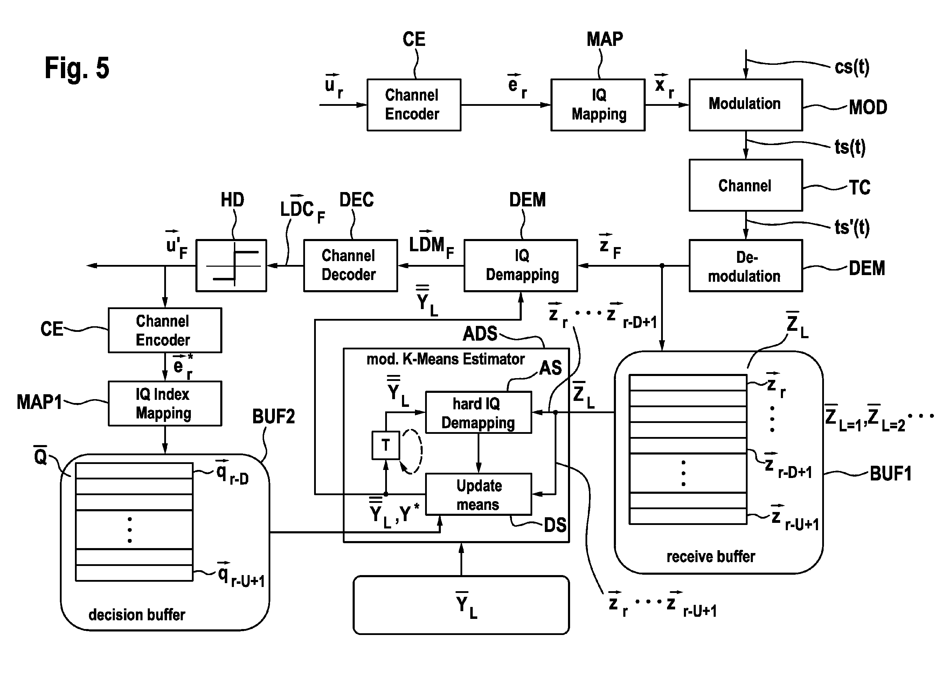

Figure 5 shows a further embodiment comprising further steps with respect to the first embodiment of Figure 4. A channel encoding step CE identical to the coding step CE of the transmitting side derives for the decoded vector of information bits $\vec{u}'_F$ new estimates of FEC re-encoded bits $\vec{e}^*_F$. It is made use of the fact that the channel decoding step DEC delivers estimates of the information bits in the vector $\vec{u}'_F$ and thus possibly caused a correction of transmission errors, which may lead to more reliable information within the decoded information bits $\vec{u}'_F$ and the FEC re-encoded bits $\vec{e}^*_F$.

The delay D, in terms of frame numbers, caused by the decoding steps shall be assumed to be $D \geq 1$.

Within a mapping step MAP1, the FEC re-encoded bits $\vec{e}^*_F$ may be mapped onto the constellation points of the current predefined constellation scheme $\overline{Y}_L$. Preferably, the predefined constellation scheme is the initial predefined constellation scheme $\overline{Y}_{L=1}$. Such mapping leads to new estimated symbol vectors as

$$\vec{q}_r = \left( q_{r,1}, ..., q_{r,O} \right)$$

with index $r-D,...,r-U+1$
giving an overall set of symbol vectors

$$\overline{Q} = \left( \vec{q}_{r-D}, ..., \vec{q}_{r-U+1} \right)$$

stored in a buffer BUF2.

In other words, a mapping of m-tuples of FEC re-encoded bits $\vec{e}^*_F$ onto respective identified constellation points of the predefined phase modulation constellation scheme $\overline{Y}_L$ is identified.

An alternative way of identifying such a mapping may be carried out, by mapping an m-tuple of FEC re-encoded bits $\vec{e}^*_F$ to an index, which points to a complex constellation point of the predefined constellation $\overline{Y}_L$ scheme. This is given as

$$\mu'\left( e^*_1, ..., e^*_m \right) : \{0,1\}^m \rightarrow \{1, 2, ..., m\} \subset \mathbb{N} \quad .$$

A further adapted phase modulation constellation scheme $Y^*$ may then be derived. An association of symbol values of the current set of symbol values $\overline{Z}_L$ may be carried out as now described in detail below.

It shall be assumed, that the vector of symbol values $\vec{z}_F$ with the arbitrary index F was contained within the set of symbol values $\overline{Z}_L$ and that

$$r - U + 1 \leq F \leq r - D \quad .$$

For this vector of symbol values $\vec{z}_F$ a corresponding derived decoded information bit vector $\vec{u}'_F$ and a respective vector of FEC re-encoded bits $\vec{e}^*_F$ were derived. For the other, remaining vectors of symbol values with index

$$r, \dots, r - D + 1$$

corresponding vectors of FEC re-encoded bits were not yet derived. These remaining symbol values are then associated to the current provided modulation scheme $\overline{Y}_L$ in the association step as previously described above.

For the further adapted phase modulation constellation scheme $Y^*$ a constellation point $* y^*_w$ with a respective index $w$ is then determined based on two types of symbol values. The first type are those symbol values of the vector of received symbol values $\vec{z}_F$, for which the identified mapping of the corresponding m-tuple of re-encoded FEC bits $\vec{e}^*_F$ yields the respective same index $w$ of the constellation point that is to be determined.

The second type are the remaining symbol values of the set $\overline{Z}_L$, for which corresponding vectors of FEC re-encoded bits were not yet derived. These remaining symbol values are associated to the corresponding constellation point with the index $w$ of the predefined phase modulation constellation scheme $\overline{Y}_L$.

Based on these types of symbol values, the determination of the constellation point is carried out in the determining step DS as previously described.

In other words, for a symbol value

$$z_{u,o} \, , \ u \le r - D$$

the identified constellation point identified by the mapping can be written as $q_{u,o}$. For a remaining symbol value

$$z_{u,o} \, , \ u \le r - D$$

the associated respective constellation point can be written as $\tilde{y}_{u,o}$.

For a symbol value $z_{u,o}$, a constellation point is then chosen as

$$\widetilde{y}_{u,o} = \begin{cases} q_{u,o} & u \le r - D \\ \widetilde{y}_{u,o} & u > r - D \end{cases} .$$

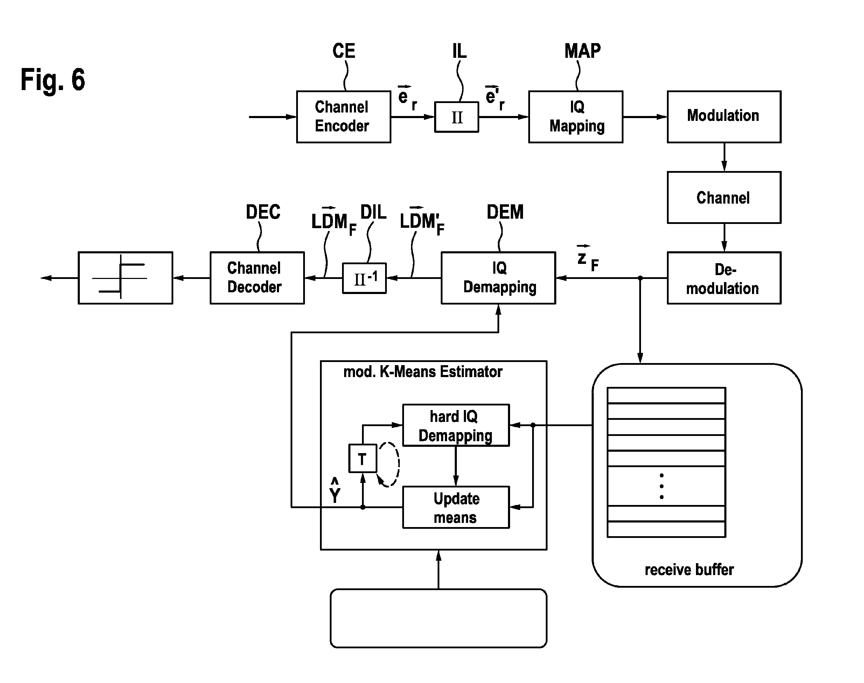

Figure 6 shows processing steps as previously described with regard to Figure 4 as well as an additional interleaving step IL and a de-interleaving step DIL. The interleaving step IL interleaves FEC encoded bits of the vector $\vec{e}_r$ to an interleaved FEC encoded bit vector $\vec{e}'_r$.

In correspondence to the interleaving step IL carried out at the transmitting side, a de-interleaving step DIL is carried out at the receiving side.

The de-interleaving step DIL receives from the de-mapping step DEM likelihood values $\vec{LDM}'_F$ as a vector of likelihood values $\vec{LDM}'_F (\vec{e}'_F)$ that corresponds to a vector of interleaved FEC encoded bits.

The derivation of this vector $\vec{LDM}'_F (\vec{e}'_F)$ from the vector of symbol values $\vec{z}_F$ is identical to the derivation of likelihood values $\vec{LDM}_F$ carried out by the de-mapping step DEM of Figure 4.

The de-interleaving step DIL de-interleaves the vector of likelihood values $\vec{LDM}'_F (\vec{e}'_F)$ corresponding to interleaved FEC encoded bits into a vector $\vec{LDM}_F$ of likelihood values corresponding to FEC encoded bits.

The further following steps of soft decoding DEC and hard decision HD for deriving received information bits are carried out as previously described with regard to Figure 4.

Figure 7a shows a derivation of the vector of likelihood values $\vec{LDC}_F$ corresponding to a vector of FEC decoded bits, via iterative processing using the steps DEM1 and CD1. Such derivation uses in an iterative manner the de-mapping step DEM1, using the soft demapping algorithm previously described, and the FEC soft decoding step CD1, using the previously described soft decoding algorithm.

As previously described with regard to Figure 4, the step DEM1 derives from a vector of symbol values $\vec{z}_F$ the vector of likelihood values $\vec{LDM}_F$ corresponding to a vector of FEC encoded bits as

$$LD\vec{M}_F^I(\vec{e}_F) \ ,$$

wherein the index $I$ = 1 , 2 , 3, ... is the iteration index.

The decoding step CD1 performs then a derivation of an updated or an improved vector of likelihood values $\vec{LDM}^{*I}_F(\vec{e}_F)$ corresponding to the vector of FEC encoded bits via an algorithm for a LPDC code or a Turbo code as previously mentioned above.

The de-mapping step DEM1 then uses in a next iteration the updated vector of likelihood values $\vec{LDM}^{*I}_F(\vec{e}_F)$ corresponding to the FEC encoded bits for deriving a further updated vector of likelihood values $\vec{LDM}^I_F(\vec{e}_F)$ corresponding to a vector of FEC encoded bits with iteration index $I$ = 2.

This derivation is now described in detail below.

The vector of likelihood values $\vec{LDM}^{*I}_F(\vec{e}_F)$ is given in the logarithmic domain. Thus, such likelihood values $\vec{LDM}^{*I}_F(\vec{e}_F)$ can be used for deriving for a chosen constellation point $\hat{y}$

the probability, that an FEC encoded bit $e^*_{r,n}$ is equal to 0 via

$$P_{ap}(e^*_{r,n}=0) = \frac{e^{LDM^*(e^*_{r,n})}}{1+e^{LDM^*(e^*_{r,n})}} \ .$$

Furthermore, the probability that the FEC encoded bit $e^*_{r,n}$ is equal to the value of 1 can be derived via

$$P_{ap}(e^*_{r,n}=1) = 1 - P_{ap}(e^*_{r,n}=0) \ .$$

These probabilities can then be used in the equation

$$LD\vec{M}_r^I(e_{r,n}) = \ln\left[\frac{\sum_{\hat{y}\in\overline{Y}_i^0} p(z_{r,j}\mid\hat{y})\prod_{l=1,l\neq i}^m P_{ap}^I\left(e_{r,(j-1)m+l}=\mu_l^{-1}(\hat{y})\right)}{\sum_{\hat{y}\in\overline{Y}_i^1} p(z_{r,j}\mid\hat{y})\prod_{l=1,l\neq i}^m P_{ap}^I\left(e_{r,(j-1)m+l}=\mu_l^{-1}(\hat{y})\right)}\right]$$

for deriving in the de-mapping step DEM1 in the iteration with index $I$ = 2 likelihood values corresponding to an FEC encoded bit $\vec{LDM}'_F(\vec{e}'_F)$. Herein, the equation

$$P_{ap}^I\left(e_{r,(j-1)m+l}=\mu_l^{-1}(\hat{y})\right)$$

is the probability, that out of the m-tuple of FEC encoded bits represented by the constellation point $\hat{y}$, the neighboring FEC encoded bits $e_{r,(j-1)m+l}$ are equal to the bit given by the inverse mapping function

$$\mu_l^{-1}(\hat{y})$$

It shall be taken into consideration, that the relationship of the bit index of an FEC encoded bit $e_{r,(j-1)m+l}$ within a vector of FEC encoded bits $\vec{e}_r$ depends on the index j of the symbol, the number m of bits forming an m-tuple and the index l = l...$m$ as

$$n = (j-1)\cdot m + l \;.$$

Preferably, multiple iterations may be carried out between the de-mapping step DEM1 and the decoding step CD1 shown in Figure 7a.

In the case, that the vector of FEC encoded bits $\vec{e}_r$ was interleaved into an interleaved vector of FEC encoded bits $\vec{e}'_r$ on the transmitting side, then a de-interleaving step DIL and an interleaving step IL as previously described with regard to Figure 6 are carried out between the de-mapping step DEM1 and the decoding step CD1 as shown in Figure 7b. The de-interleaving step DIL de-interleaves a vector of likelihood values $\vec{LDM}'_F(\vec{e}'_F)$ corresponding to an interleaved vector of FEC encoded bits into a de-interleaved vector of likelihood values $\vec{LDM}_F(\vec{e}_F)$ corresponding to a de-interleaved vector of FEC encoded bits.

The interleaving step IL interleaves the vector of likelihood values $\vec{LDM}_F(\vec{e}_F)$ corresponding to de-interleaved FEC encoded bits into a vector of likelihood values $\vec{LDM}^{*}{}'_F(\vec{e}'_F)$ corresponding to interleaved FEC encoded bits.

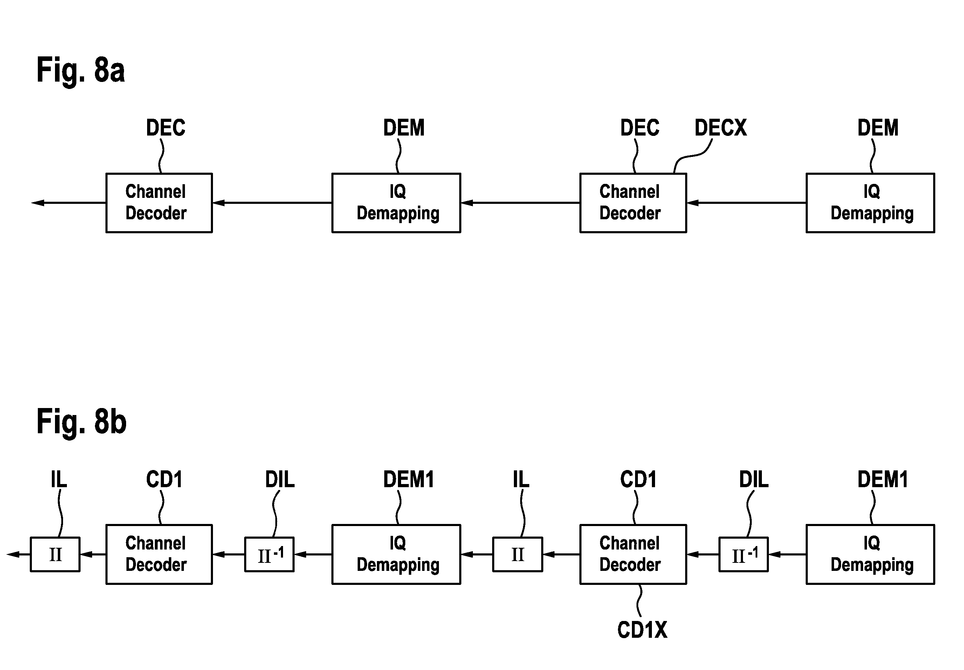

Figure 8a shows a sequence of processing steps DEM and DEC, which were previously described, as sequential processing steps that carry out the iterative processing previously described with regard to Figure 7a as a chain of sequential steps. This can be seen as a rollout of the iterative processing steps of Figure 7a. In such a chain of sequential processing steps, the step of the soft de-mapping algorithm DEM and the step of soft decoding algorithm CD alternate.

Figure 8b shows corresponding sequential processing steps DEM1, IL, CD1 and DIL, which were previously described, as a chain of sequential steps carried out for implementing the iterative processing previously described with regard to Figure 7b in conjunction with the previously described interleaving principle. In such a chain of sequential processing steps, the step of the soft de-mapping algorithm DEM1 and the step of soft decoding algorithm CD1 alternate with the interleaving step and the de-interleaving step being carried out in between, respectively.

Preferably, a vector of likelihood values corresponding to a vector of FEC decoded bits derived in a step DECX of Figure 8a or CD1X of Figure 8b may be used for deriving via a hard decision step a vector of FEC decoded bits a vector of information bits, which in turn is then used to derive a vector of FEC re-encoded bits, as previously described with regards to

Figure 5. Still, further steps of demapping DEM, DEM1 and decoding DEC, CD1 may be carried out, using the vector of likelihood values corresponding to a vector of FEC decoded bits derived in the step DECX.

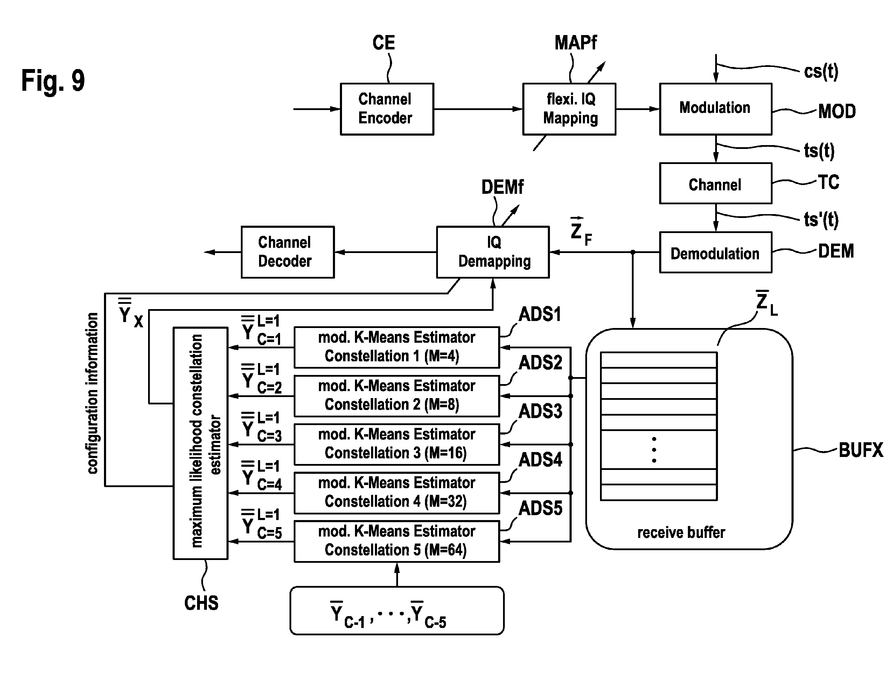

Figure 9 shows at the transmitting side a mapping step MAPf, which is able to switch between different constellation schemes of different phase modulation methods. The receiving side shows steps, which allow the receiver to detect one out of a set different provided predefined phase modulation constellation schemes $\overline{Y}_1$ , ..., $\overline{Y}_5$ with respective indices $C = 1,...,5$ as the constellation scheme used at the transmitting side. The receiving side is thus able to perform so-called blind detection of a constellation scheme used by the transmitting side.

For each of these provided modulation constellation schemes $\overline{Y}_1$, ..., $\overline{Y}_5$ respective adapted phase modulation constellation schemes $\overline{\overline{Y}}_{C=1}^{L=1}$ are derived assuming different constellation schemes within the respective adaptation steps AS1, ..., AS5. For this, in each adaptation step AS1, ..., AS5 , the set of received symbol values $\overline{Z}_L$ is used. It shall be assumed as an example, that only one iteration $L = 1$ as described with regard to Figure 4 has yet been carried out. The index $L$ may be greater than 1 meaning that more than one iteration has been carried out yet.

In a step CHS, one out of the derived adaptive phase modulation constellation schemes is chosen as that adapted phase modulation constellation scheme $\overline{Y}_X$ that is to be used in the step of the de-mapping DEM for deriving via the soft de-mapping algorithm from a vector of received symbol values $\vec{z}_F$ the vector of likelihood values $\vec{LDM}_F$

corresponding to a vector of FEC encoded bits.

The chosen one of the adapted phase modulation constellation schemes $\overline{\overline{Y}}_X$ and its respective predefined phase modulation constellation scheme maximize a likelihood criterion between the adapted phase modulation constellation schemes $\overline{\overline{Y}}_{C=1}$, $\overline{\overline{Y}}_{C=2}$, ... and the respective predefined phase modulation constellation schemes $\overline{Y}_{C=1}$, $\overline{Y}_{C=2}$,..., respectively.

In other words, it is chosen that adapted phase modulation constellation scheme $\overline{\overline{Y}}_X$, which yields a respective maximized likelihood between the adapted phase modulation constellation scheme $\overline{\overline{Y}}_X$ and its respective predefined phase modulation constellation scheme $\overline{Y}_X$. This is equivalent to minimizing the criterion

$$\overline{\overline{Y}}_X = \arg\min_j \sum_{i=1}^{|\overline{Y}_j|} \left( \overline{\overline{Y}}_i - \overline{Y}_i \right)^2 \quad .$$

Different principles have been described with regard to the different Figures 4, 5, 6, 7a, 7b, 8a, 8b and 9.

In the above described description regarding Figure 4, a decoding principle with steps for a method carried out at a receiving side were outlined.

Furthermore, an optional principle of carrying out iterations of the adapting step has been explained with regard to Figure 4.

With regard to Figure 5, a principle of deriving a decoded vector of information and then using the corresponding vector of re-encoded bits for determining which symbol value shall be assigned to which constellation point, was explained.

With regard to Figure 6, a principle of using an interleaving step at a transmitting side and an interleaving step at the receiving side was explained.

With regard to Figure 7a, a principle of iterative soft demapping and soft decoding was explained.

With regard to Figure 7b, a principle of iterative soft demapping and soft decoding with intermediate steps of interleaving and de interleaving was explained.

With regard to Figure 8a, a principle of carrying out the steps described by Figure 7a as a chain of sequential steps was explained.

With regard to Figure 8b, a principle of carrying out the steps described by Figure 7b as a chain of sequential steps was explained.

With regard to Figure 9, a principle of providing a set of different constellation schemes, deriving respective different adapted constellation schemes and then choosing one of the adapted constellation schemes for the step of soft demapping has been explained.

It is clear for a person skilled in the art, that a combination of one or more of the different principles described with regard to the different Figures 4, 5, 6, 7a, 7b, 8a, 8b and 9 is technically possible and thus disclosed by this specification.

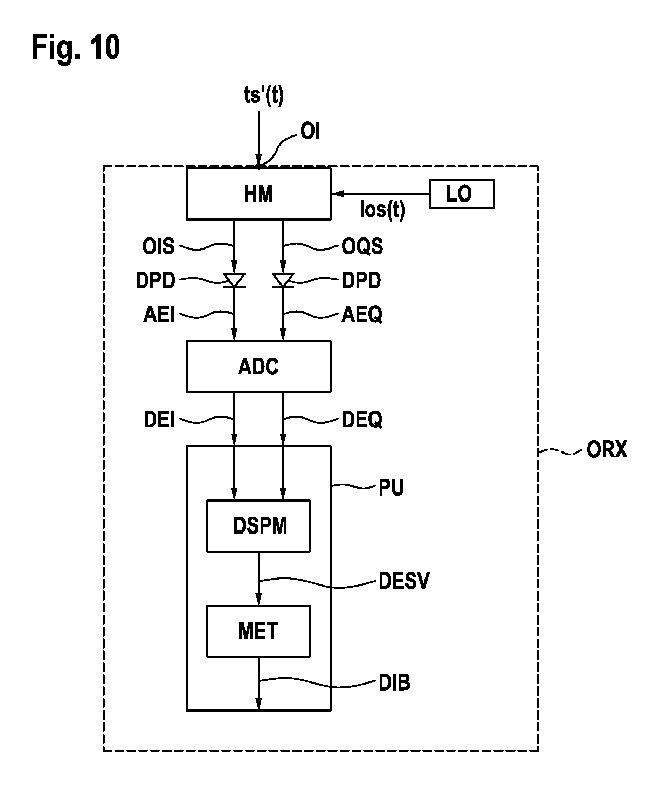

Figure 10 shows a proposed optical receiver ORX. The receiver ORX contains an optical interface, at which the transmitted signal *ts'*(*t*) is received.

A local oscillator LO provides a coherent signal *los*(*t*). A coherent optical receiver, alternatively called 90° optical hybrid mixer HM, mixes the coherent signal *los*(*t*) and the transmitted signal *ts'*(*t*) for down-conversion and thus derives optical signals OIS and OQS, which relate to an in-phase signal component and a quadrature signal component of the down-mixed optical signal. The optical signals OIS and OQS are then converted by respective differential photodiodes into analogue electrical signals AIS and AEQ, which correspond to the in-phase signal component and the quadrature signal component of the down-mixed optical signal.

The analogue electrical signals AIS and AEQ are then converted into respective digital electrical signals DEI and DEQ by an analogue digital converter ADC.

A processing unit PU performs preferably one or more of the following digital signal processing methods DSPM which are

- chromatic dispersion compensation
- polarization rotation
- skew compensation
- timing recovery
- frequency offset correction

- phase error correction.

This yields derived symbol values DESV in the digital electrical domain.

Furthermore, the processing unit performs the method steps MET of the proposed method previously described above, for deriving from the derived symbol values DESV derived information bits DIB.

Preferably, the processing unit contains also the analogue digital converter ADC.

The functions of the various elements shown in the Figure 10, including any functional blocks labeled as 'processing unit', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processing unit' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method of deriving information bits from a received phase modulated optical signal carrying forward error correction (FEC) encoded bits, comprising

   - deriving from said optical signal ($ts'(t)$) received complex symbol values,
   - providing a predefined phase modulation constellation scheme ($\overline{Y}_{L=1}$),
   - deriving from said predefined phase modulation constellation scheme ($\overline{Y}_{L=1}$) an adapted phase modulation constellation scheme $\overline{\overline{Y}}_{L=1}$, using a set ($\overline{Z}_L$) of said received symbol values,
   - deriving, via a soft-demapping algorithm, from a vector of received symbol values ($\vec{z}_F$) a vector of likelihood values ($\vec{LDM}_F$) corresponding to a vector of FEC encoded bits, using said adapted phase modulation constellation scheme ($\overline{\overline{Y}}_{L=1}$),
   - deriving, via a FEC soft-decoding algorithm, from said vector of likelihood values ($\vec{LDM}_F$) corresponding to a vector of FEC encoded bits a vector of likelihood values ($\vec{LDC}_F$) corresponding to a vector of FEC decoded bits,
   - deriving from said vector of likelihood values ($\vec{LDC}_F$) corresponding to a vector of FEC decoded bits a vector of information bits ($\vec{u}'_F$).

2. Method according to claim 1,
   wherein the step of deriving said adapted phase modulation constellation scheme ($\overline{\overline{Y}}_{L=1}$) comprises

   - associating the symbol values of said set ($\overline{Z}_L$) to respective constellation points of said predefined phase modulation constellation scheme ($\overline{Y}_{L=1}$),
   - determining a constellation point of said adapted phase modulation constellation scheme ($\overline{\overline{Y}}_{L=1}$) based on those of said symbol values that were associated to the corresponding constellation point of said predefined phase modulation constellation scheme ($\overline{Y}_{L=1}$).

3. Method according to claim 2, comprising

   - determining said constellation point of said adapted phase modulation constellation scheme ($\overline{\overline{Y}}_{L=1}$) as the mean value of those symbol values that were associated to the corresponding constellation point of said predefined phase modulation scheme ($\overline{Y}_{L=1}$).

4. Method according to claim 2, comprising

   - associating said symbol values of said set ($\overline{Z}_L$) to said respective constellation points of said predefined phase modulation constellation scheme ($\overline{Y}_{L=1}$), such that a criterion between an associated symbol value and the respective constellation point is optimized.

**5.** Method according to claim 4,
wherein said criterion is an Eucledian distance that is minimized.

**6.** Method according to claim 4,
wherein said criterion is a probability that is maximized.

**7.** Method according to claim 2, comprising

- updating said predefined phase modulation constellation scheme ($\overline{Y}_{L=2}$) as said adapted phase modulation constellation scheme ($\overline{\overline{Y}}_{L=1}$),
- deriving an updated set of symbol values ($\overline{Z}_{L=2}$) using further received complex symbol values,
- deriving a further adapted phase modulation constellation scheme ($\overline{\overline{Y}}_{L=2}$), by

  o associating the symbol values of said updated set ($\overline{Z}_{L=2}$) to respective constellation points of said predefined phase modulation constellation scheme ($\overline{Y}_{L=2}$),
  o determining a constellation point of said further adapted phase modulation constellation scheme ($\overline{\overline{Y}}_{L=2}$) based on those of said symbol values that were associated to the corresponding constellation point of said updated predefined phase modulation constellation scheme ($\overline{Y}_{L=2}$).

**8.** Method according to claim 2,
wherein a symbol value represents an m-tuple of FEC encoded bits,
comprising furthermore

- deriving for a decoded vector of information bits ($\vec{u}'_F$) a vector of FEC re-encoded bits ($\vec{e}^*_F$),
- identifying a mapping of m-tuples of said FEC re-encoded bits ($\vec{e}^*_F$) onto indices of respective constellation points of said predefined phase modulation constellation scheme ($\overline{Y}_L$),
- deriving a further adapted phase modulation constellation scheme ($Y^*$), by

  o associating the remaining symbol values ($\vec{z}_r, ..., \vec{z}_{r-D+1}$) of said set ($\overline{Z}_L$), for which corresponding vectors of FEC re-encoded bits were not yet derived, to respective con-stellation points of said predefined adapted phase modulation constellation scheme ($\overline{Y}_L$),
  o determining a constellation point with a respective index of said further adapted phase modulation con-stellation scheme ($\overline{\overline{Y}}_{L=1}$) based on

    ■ those remaining symbol values, that were associated to the corresponding constellation point of said predefined phase modulation constellation scheme ($\overline{Y}_L$)
    ■ and those symbol values of said vector of received symbol values ($\vec{z}_F$), for which the identified mapping of the corresponding m-tuple of re-encoded FEC bits ($\vec{e}^*_F$) yields said respective same index of the constellation point to be determined.

**9.** Method according to claim 1,
wherein the step of deriving said vector of likelihood values ($\vec{LDC}_F$) corresponding to a vector of FEC decoded bits is carried out in iterative processing steps using said soft-demapping algorithm and said FEC soft-decoding algorithm in an iterative manner.

**10.** Method according to claim 9,
wherein said iterative processing steps are carried out as sequential processing steps in which said soft-demapping algorithm and said soft-decoding algorithm alternate.

**11.** Method according to claim 1,
comprising furthermore,

- providing a set of predefined phase modulation constellation schemes ($\overline{Y}_1, \overline{Y}_2,...$),
- deriving for each of said predefined phase modulation constellation schemes ($\overline{Y}_1, \overline{Y}_2,...$) respective adapted

phase modulation constellation schemes ($\overline{\overline{Y}}_1$, $\overline{\overline{Y}}_2$,...), using said set ($\overline{Z}$) of said received symbol values,
- choosing one of said adapted phase modulation constellation schemes as said adapted phase modulation constellation scheme ($\overline{\overline{Y}}_X$) used for deriving, via said soft-demapping algorithm, from said vector of received symbol values ($\vec{z}_F$) said vector of likelihood values ($\vec{LDM}_F$) corresponding to a vector of FEC encoded bits.

12. Method according to claim 11,
wherein the chosen one of said adapted phase modulation constellation schemes ($\overline{\overline{Y}}_X$) and its respective predefined phase modulation constellation scheme maximize a likelihood criterion between the adapted phase modulation constellation schemes ($\overline{\overline{Y}}_1$, $\overline{\overline{Y}}_2$,...), and the respective predefined phase modulation constellation schemes ($\overline{Y}_1$, $\overline{Y}_2$,...), respectively.

13. Optical receiver,
comprising

- an optical interface (OI) operable to receive a phase modulated optical signal carrying forward error correction (FEC) encoded bits,

- a local oscillator (LO), an optical hybrid mixer (HM), an analogue digital converter (ADC) and a processing unit (PU), operable in conjunction to deriving from said optical signal ($ts'(t)$) received complex symbol values,

wherein said processing unit (PU) is furthermore configured to

- provide a predefined phase modulation constellation scheme ($\overline{Y}_{L=1}$),
- derive from said predefined phase modulation constellation scheme ($\overline{Y}_{L=1}$) an adapted phase modulation constellation scheme ($\overline{\overline{Y}}_{L=1}$), using a set ($\overline{Z}_L$) of said received symbol values,
- derive, via a soft-demapping algorithm, from a vector of received symbol values ($\vec{z}_F$) a vector of likelihood values ($\vec{LDM}_F$) corresponding to a vector of FEC encoded bits, using said adapted phase modulation constellation scheme ($\overline{\overline{Y}}_{L=1}$),
- derive, via a FEC soft-decoding algorithm, from said vector of likelihood values ($\vec{LDM}_F$) corresponding to a vector of FEC encoded bits a vector of likelihood values ($\vec{LDC}_F$) corresponding to a vector of FEC decoded bits,
- derive from said vector of likelihood values ($\vec{LDC}_F$) corresponding to a vector of FEC decoded bits a vector of information bits ($\vec{u}_F$).

# Fig. 1a

# Fig. 1b

# Fig. 2

# Fig. 3a

**Fig. 3b**

**Fig. 3c**

Fig. 4

Fig. 5

# Fig. 6

# Fig. 7a

# Fig. 7b

# Fig. 8a

DEM — IQ Demapping → DEC / DECX — Channel Decoder → DEM — IQ Demapping → DEC — Channel Decoder →

# Fig. 8b

DEM1 — IQ Demapping → DIL — $\Pi^{-1}$ → CD1 — Channel Decoder / CD1X → IL — $\Pi$ → DEM1 — IQ Demapping → DIL — $\Pi^{-1}$ → CD1 — Channel Decoder → IL — $\Pi$ →

**Fig. 9**

# Fig. 10

Europäisches
Patentamt

European
Patent Office

Office européen
des brevets

# EUROPEAN SEARCH REPORT

Application Number

EP 14 30 6058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LILONG LIU ET AL: "Zero-overhead noise compensation via amplitude and phase equalization for optical OFDM transmission", COMMUNICATIONS AND PHOTONICS CONFERENCE (ACP), 2012 ASIA, IEEE, 7 November 2012 (2012-11-07), pages 1-3, XP032389538, ISBN: 978-1-4673-6274-0 | 1-6, 8-10,13 | INV. H04L25/06 H04L1/00 |
| A | * section 2, last sentence, in particular point 1 * | 7 | |
| X | US 2002/122509 A1 (MUELLER BRUCE D [US] ET AL) 5 September 2002 (2002-09-05) | 1-6, 8-10,13 | |
| A | * paragraphs [0039] - [0042] * | 7 | |

TECHNICAL FIELDS
SEARCHED     (IPC)

H04L

~~The present search report has been drawn up for all claims~~

| Place of search | Date of completion of the search | Examiner |
|---|---|---|
| Munich | 24 November 2014 | Agudo Cortada, E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

...........................................................................................

& : member of the same patent family, corresponding
     document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 13

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 14 30 6058

The Search Division considers that the present European patent application does not comply with the requirements of unity of invention and relates to several inventions or groups of inventions, namely:

1. claims: 1-10, 13

   deriving information bits from a received phase modulated optical signal, wherein two subsequent adjustments of the constellation points take place for soft decoding purposes
   ---

2. claims: 11, 12

   deriving information bits from a received phase modulated optical signal, wherein a constellation scheme is selected from a set of constellation schemes
   ---

## ANNEX TO THE EUROPEAN SEARCH REPORT
## ON EUROPEAN PATENT APPLICATION NO.

EP 14 30 6058

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2014

| Patent document cited in search report | Publication date | Patent family member(s) | Publication date |
|---|---|---|---|
| US 2002122509 A1 | 05-09-2002 | NONE | |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. RYAN ; S. LIN.** Channel Codes: Classical and Modern. Cambridge University Press, September 2009
- **T. K. MOON.** Error Correction Coding: Mathematical Methods and Algorithms. Wiley, 2005
- **FRANK R. KSCHISCHANG ; BRENDAN J. FREY ; HANS-ANDREA LOELIGER.** Factor graphs and the sum-product algorithm. *IEEE TRANSACTIONS ON INFORMATION THEORY,* February 2001, vol. 47 (2
- **J. HAGENAUER ; E. OFFER ; L. PAPKE.** Iterative Decoding of Binary Block and Convolutional Codes. *IEEE TRANSACTIONS ON INFORMATION THEORY,* March 1996, vol. 42 (2